Europäisches Patentamt

European Patent Office

Office européen des brevets

(19)

(11) Veröffentlichungsnummer : **0 371 372 B1**

(12) # EUROPÄISCHE PATENTSCHRIFT

(45) Veröffentlichungstag der Patentschrift :
**09.09.92 Patentblatt 92/37**

(51) Int. Cl.$^5$ : **A01D 61/00, A01D 75/18**

(21) Anmeldenummer : **89121490.0**

(22) Anmeldetag : **21.11.89**

(54) Mitnehmereinheit eines umlaufenden Förderers.

(30) Priorität : **29.11.88 DE 3840168**

(43) Veröffentlichungstag der Anmeldung :
**06.06.90 Patentblatt 90/23**

(45) Bekanntmachung des Hinweises auf die
Patenterteilung :
**09.09.92 Patentblatt 92/37**

(84) Benannte Vertragsstaaten :
**BE FR GB IT**

(56) Entgegenhaltungen :
**DE-A- 2 442 355
DE-B- 1 159 351
DE-C- 3 042 596
US-A- 2 696 290
US-A- 4 706 448**

(73) Patentinhaber : **DEERE & COMPANY
1 John Deere Road
Moline, Illinois 61265 (US)**

(72) Erfinder : **Dannigkeit, Helmut
Lerchenstrasse 6
W-6661 Battweiler (DE)**

(74) Vertreter : **Feldmann, Bernhard et al
DEERE & COMPANY European Office Patent
Department Steubenstrasse 36-42
W-6800 Mannheim 1 (DE)**

## Beschreibung

Die Erfindung betrifft eine Mitnehmereinheit eines umlaufenden Förderers, insbesondere einen Einzugsfingerzusammenbau eines Schneckenförderers einer Erntebergungsvorrichtung, mit einem Mitnehmer und einem Halter.

Derartige Mitnehmereinheiten (DE-AS-1 159 351, DE-PS-3 042 596, US-PS-2 701 634) finden sich insbesondere an Förderschnecken, die außer einer Förderbewegung in deren Axialrichtung auch eine Förderbewegung radial oder tangential zu ihr ausüben. Insbesondere im Erntemaschinenbereich wird diese Fördererbauart verwendet. Die Mitnehmer bzw. -einheiten dieser Förderer werden normalerweise über einen exzentrisch gelagerten Träger mehr oder weniger radial bewegt und ragen somit während des Fördervorgangs unterschiedlich weit aus dem Gehäuse heraus. Insbesondere dann, wenn der Mitnehmer, bzw. sein Außenteil, soweit als möglich aus dem Gehäuse herausragt, kann beim Auftreffen auf einen mit dem Erntegut aufgenommenen Fremdkörper der Mitnehmer brechen, wobei sich das größte Biegemoment im Bereich der Wandung des Gehäuses ergibt. Der abgebrochene Außenteil fällt dann regelmäßig in den Erntegutstrom und wird mit diesem den Dresch-, Abscheide- und Häckselorganen zugeführt - was häufig zu beträchtlichen Schäden führt.

Aus der DE-A-2 442 355 ist ein Halter bekannt, der aus gummielastischem oder textilem, flexiblem Material gebildet ist und im Falle eines Bruchs einen abgebrochenen Teil eines Zinkens einer Heuwerbungsmaschine halten soll. Hierzu übergreift der als ein Riemen ausgebildete Halter den Mitnehmer mittels Aufnahmeöffnungen, die zu einer Reibverbindung zwischen dem Halter und dem Zinken führen. In dem anderen Endbereich ist der Halter mit einem Träger des Zinkens verbunden.

Dieser Halter ist insofern nachteilig, als er nicht verhindern kann, daß der abgebrochene Zinkenteil nach dem Bruch in der Luft herum gewirbelt wird und nach kurzer Zeit intensiver Beaufschlagung mit Fördergut doch abreißen kann.

Die der Erfindung zugrunde liegende Aufgabe wird darin gesehen, die Mitnehmereinheit derart zu gestalten oder den Mitnehmer so anzuordnen, daß im Falle seines Bruchs der Außenteil nicht in den Erntegutstrom fällt und auch bei weiterer Beaufschlagung mit Fördergut an dem Förderer verbleibt.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwikkeln.

Auf diese Weise wird der Außenteil, sobald er von dem Innenteil abgebrochen ist, von dem Halter daran gehindert, radial von dem Förderer nach außen in den Erntegutstrom zu entfallen.

Die plastische Deformierbarkeit des Halters ermöglicht es, den Außenteil beim Aufprall auf den Fremdkörper aus der üblichen Lage des Mitnehmers zu schwenken, ihn dabei zu halten und ihn aufgrund der Schwenkbewegung des Trägers innerhalb des Gehäuses radial wegzuschwenken und somit bis hinter die Innenwand des Gehäuses zu ziehen, so daß er beim weiteren relativen Schwenken des Trägers gegenüber dem Gehäuse in radialer Richtung nach außen nicht mehr aus diesem austritt.

In einfacher Weise wird der Außenteil an dem Halter über eine Anschlag-Aufnahmeöffnung-Kombination gehalten, und fertigungsaufwendige Verbindungen mittels Schrauben, Nieten, Schweißen oder dergleichen können unterbleiben - wenn sie auch jederzeit möglich und in bestimmten Fällen evtl. auch gewünscht sind.

Zur Vermeidung von Schäden an dem Gehäuse, dem Halter und dem Träger ist eine Sollbruchstelle zwischen dem Innen- und dem Außenteil vorgesehen, die somit auch definiert, wo die Grenze zwischen dem Außen- und dem Innenteil liegt und wo der Halter an dem Mitnehmer angreifen muß.

Dadurch, daß der Mitnehmer um den Träger schwenkt, und zwar in der aus dem Stand der Technik bekannten Weise, wird nach dem Bruch der Halter mit dem Außenteil über den Träger in den Innenraum des Gehäuses gezogen und kann dort gegebenenfalls verbleiben, so daß er beim anschließenden Fördervorgang nicht mehr mitwirkt und aufgrund seiner losen Befestigung an dem Träger auch nicht nach außen gerissen werden kann.

Eine Spielpassung zwischen der Aufnahmeöffnung und dem Mitnehmer stellt sicher, daß der Außenteil problemlos aus dem gegebenenfalls tangential und radial weggebogenen Teil des Halters herausgleitet, in den Innenraum des Gehäuses fällt und dort verbleibt.

Eine besonders einfache Ausbildung des Halters ist in den Patentansprüchen 6 und 7 angegeben. Es wäre auch möglich, den Halter U-förmig auszubilden, wobei Öffnungen vorzusehen wären, die ein problemloses Austreten des Außenteils aus dem Halter gewährleisten.

In der Zeichnung ist ein nachfolgend näher beschriebenes Ausführungsbeispiel der Erfindung dargestellt. Es zeigt:

Fig. 1 eine Erntebergungsvorrichtung mit einem Förderer und darin befindlichen Mitnehmereinheiten in Seitenansicht und im Schnitt,

Fig. 2 den Förderer in Vorderansicht, wobei im Bereich einer Mitnehmereinheit ein Gehäuse des Förderers aufgeschnitten ist,

Fig. 3 eine Draufsicht auf eine Lagerschale der Mitnehmereinheit,

Fig. 4 eine Vorderansicht der Lagerschale aus Figur 3,

Fig. 5 eine Ansicht des inneren Endbereichs eines in der Mitnehmereinheit gehaltenen Mitnehmers,

Fig. 6 die Mitnehmereinheit mit einem Halter in vergrößerter Darstellung in Seitenansicht und im Schnitt gemäß der Linie 6-6 in Figur 2 und in Blickrichtung der dazugehörigen Pfeile,

Fig. 7 die Mitnehmereinheit aus Figur 8 in einer Ansicht von unten,

Fig. 8 einen Schnitt durch die Mitnehmereinheit entlang der Linie 8-8 und in Blickrichtung der dazugehörigen Pfeile in Figur 7 und

Fig. 9 den Mitnehmer, nachdem ein Bruch zwischen dessen Innen- und Außenteil eingetreten ist.

In der Zeichnung ist mit 10 eine Erntebergungsvorrichtung für einen Mähdrescher bezeichnet, die aus einer Schneidwerksplattform 12 und aus einem die Schneidwerksplattform 12 aufnehmenden Schrägförderergehäuse 14 besteht. Die Erntebergungsvorrichtung 10 läßt sich über Hydraulikzylinder 16 vertikal verstellen.

Die Schneidwerksplattform 12 besteht aus einem nach oben offenen Behälterteil, einem Boden 18, einer Rückwand 20 und Seitenteilen 22. Am vorderen Ende des Bodens 18 befindet sich ein Mähwerksbalken 24, über den das abgeschnittene Erntegut einem umlaufenden Förderer 28 in der Art einer Einzugsschnecke mittels einer Haspel 26 zugeführt wird.

Die Schneidwerksplattform 12 ist wesentlich breiter als das Schrägförderergehäuse 14, so daß der Förderer 28 das Erntegut zur Mitte zusammenzieht und es ins Schrägförderergehäuse 14 abgibt, wo es von einem Schrägförderer 30 erfaßt und nach oben und rückwärtig über einen Boden 32 des Schrägförderergehäuses 14 geleitet wird. Das Erntegut gelangt dann zu einer in der Zeichnung nicht dargestellten Dreschvorrichtung des Mähdreschers.

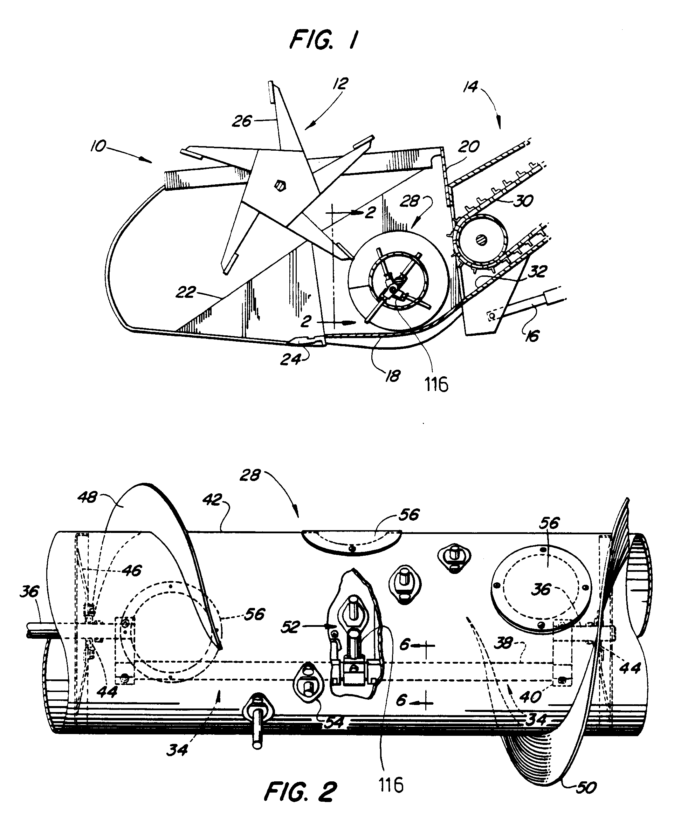

Wie aus Fig. 2 hervorgeht, ist der Förderer 28 auf einer Tragvorrichtung 34 angeordnet, die aus zwei koaxial angeordneten Trägern 36 und einem dazu exzentrisch angeordneten Träger 38 besteht, der starr mit den Trägern 36 über Exzenterteile verbunden ist. Die beiden an dem Träger 38 angeschlossenen Träger 36 sind endseitig von dem Förderer 28 in den Seitenteilen 22 der Schneidwerksplattform 12 gelagert und gegen Drehen gesichert.

Der Förderer 28 besteht ferner aus einem zylindrischen Gehäuse 42, das endseitig mit sternförmig angeordneten Tragelementen 46 ausgerüstet ist, die sich mittels Wälzlagern 44, bzw. anderen Lagerelementen, auf den Trägern 36 abstützen. Auf der Oberfläche des zylindrischen Gehäuses 42 des Förderers 28 befinden sich gegenläufig angeordnete Schneckenwendeln 48 und 50, die mit dem Boden 18 und der Rückwand 20 der Schneidwerksplattform 12 zusammenwirken und somit das Erntegut zum Zentrum des Förderers 28 bewegen, dem zahlreiche Mitnehmereinheiten 52 mit jeweils einem Mitnehmer 60 und einem Halter 116 zugeordnet sind, die auf dem mittleren Träger 38 befestigt sind. Jeder Mitnehmer 60 erstreckt sich durch eines von zahlreichen Führungselementen 54, die in der Wandung des zylindrischen Gehäuses 42 vorgesehen und in zwei diametral gegenüberliegenden Gruppen angeordnet sind, wobei die Verbindungslinien zwischen den Enden der Mitnehmer 60 einer jeden Gruppe eine spiralförmige Linie bilden. Lösbare Abdeckplatten 56, die Service-Öffnungen abdecken und nach ihrer Entfernung die Möglichkeit bieten, die Mitnehmereinheiten 52 im inneren Teil des zylindrischen Gehäuses 42 entsprechend zu warten, sind an der Oberseite des zylindrischen Gehäuses 42 vorgesehen. Die in der Zeichnung der Einfachheit halber nicht dargestellten Antriebselemente dienen zum Antrieb des Förderers 28 und der beiden äußeren Träger 36.

Jede Mitnehmereinheit 52 weist ein paar lösbare Lagerhälften bzw. Lagerschalen 58 auf, die zusammen ein Lagerauge bilden und die zu den Mitnehmerelementen 52 gehörenden Mitnehmer 60 aufnehmen. Die beiden Lagerschalen 58 jeder Mitnehmereinheit 52 sind einenends durch einen Gelenkbolzen 62 und am gegenüberliegenden Ende mittels eines Schraubenbolzens 64 miteinander verbunden, der nach dem Festziehen die beiden Lagerschalen 58 auf dem Träger 38 sichert, jedoch nicht auf diesem drehfest festlegt. Jeder Mitnehmer 60 besteht aus einer zylindrischen Stange 66 und einem endseitigen vierkantförmig ausgebildeten Lagerteil 68. Der Lagerteil 68 bildet am Anschlußende der Stange 66 eine Schulter 70 und weist eine Bohrung 72 auf, deren Achse rechtwinklig zur Stange 66 verläuft.

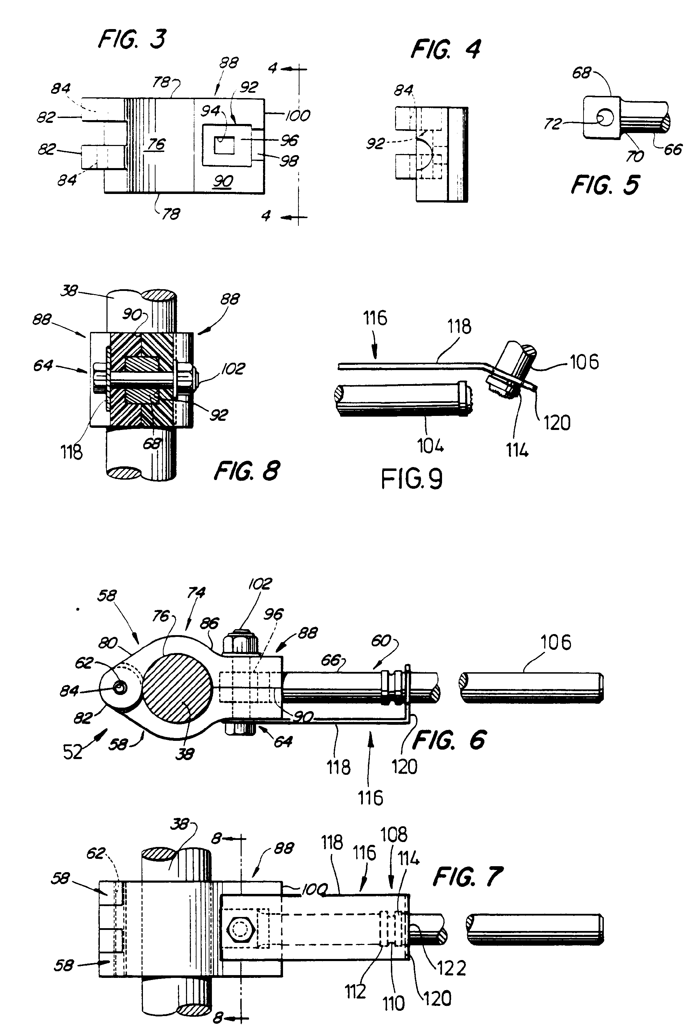

Jede Hälfte der Lagerschale 58 besteht aus einem Lagerwandteil 74 mit einer halbkreisförmigen Lageroberfläche 76 und endseitig gegenüberliegenden, parallel verlaufenden Stirnflächen 78 (Fig. 3). Am einen Ende des Lagerwandteils 74 (Gelenkseite 80) befinden sich zwei Lagerösen 82, die rechtwinklig zur Achse der Lageroberfläche 76 verlaufen. Die Lagerösen 82 sind mit Bohrungen 84 ausgerüstet, die koaxial und parallel zur Achse der Lageroberfläche 76 verlaufen. An der gegenüberliegenden Seite des Lagerwandteils 74 verläuft rechtwinklig zur Achse der Lageroberfläche 76 ein Mitnehmeraufnahmeteil 88, der mit einer Innenoberfläche 90 versehen ist, die plan und parallel zur Achse der Lageroberfläche 76 verläuft und eine in etwa rechteckförmige Tasche 92 bildet, die zur Aufnahme des Lagerteils 68 des Mitnehmers 60 dient. Eine Bohrung bzw. Durchdringung 94 mit rechteckförmigem Querschnitt verläuft rechtwinklig zur Innenoberfläche 90 des Mitnehmeraufnahmeteils 88. Die Bohrung 94 ersteckt sich durch den Mitnehmeraufnahmeteil 88 in etwa von der Mitte einer Fläche 96 der Tasche 92 aus. Eine halbkreisförmige Einbuchtung 98 verläuft rechtwinklig zur Achse der Lageroberfläche 76 zwischen der Tasche 92 und einer Außenseite 100 der Lagerschale 58.

Jede Lagerschale 58 ist aus einem verschleißarmen Material hergestellt und in der Lage, gute Gleiteigenschaften zu bieten, ohne daß sie geschmiert werden muß. Das Lagermaterial kann aus Polyamid ST 801 hergestellt sein. Ein derartiger Kunststoff hat im Vergleich zu Metall bessere Laufeigenschaften und kann auch im Spritz-Gußverfahren hergestellt bzw. auf seiner Unterlage aufgebracht werden.

Wie aus den Fig. 3, 6 und 7 hervorgeht, ist der seitliche Versatz der Lagerösen 82 und die Anordnung der Bohrung 84 so gewählt, daß zwei gleiche Lagerschalen 58 mit ihren Lageroberflächen 76 in eine Stellung gemäß Fig. 6 bzw. 7 gebracht werden können. Das heißt, die zugehörigen Stirnseiten der Lageroberflächen 76 liegen in dieser Stellung gegenüber und liegen an der Außenoberfläche des Trägers 38 an. Die Lagerschalen 58 passen dabei so ineinander, daß der Gelenkbolzen 62 ohne weiteres in die Bohrung 84 eingesetzt werden kann. Durch diese Maßnahme werden die beiden Lagerschalen 58 gelenkig miteinander verbunden, wobei die sich gegenüberliegenden Lageroberflächen 76 eine zylindrische Bohrung zur Aufnahme des Trägers 38 bilden. Die erfindungsgemäße und vorteilhafte Anordnung und Ausbildung der Lagerschalen 58 kann auch anders gewählt werden. So ist es beispielsweise nicht notwendig, daß sie einander identisch sind. Andere Formgebungen für die Lagerschale 58 und deren Kupplungselemente sind möglich, jedoch ist es besonders vorteilhaft, wenn die beiden Lagerschalen 58 gelenkig miteinander verbunden werden.

Zur Aufnahme des Trägers 38 werden die beiden Lagerschalen 58 auseinandergeklappt, über den Träger 38 gestülpt und anschließend geschlossen. Der Mitnehmeraufnahmeteil 88 jeder Hälfte einer Lagerschale 58 ist mit Bezug auf die Mittellinie symmetrisch ausgebildet und rechtwinklig zur Achse der Lageroberfläche 76 ausgerichtet, so daß die Bohrungen 94 und die Tasche 92, sowie die Einbuchtungen 98 ohne weiteres zusammenwirken können. Bevor die Lagerschalen 58 zur Aufnahme des Trägers 38 geschlossen werden, wird ein Mitnehmer 60 jeweils durch das entsprechende Führungselement 54 geführt, so daß dann die beiden Lagerschalen 58 zusammengeklappt werden können und die Tasche 92 den Lagerteil 68 umgeben bzw. aufnehmen kann. Dabei umschließen die beiden Einbuchtungen 98 der Lagerschalen 58 die Stange 66 jedes Mitnehmers 60, wobei die Schulter 70 des Mitnehmers 60 zwischen den beiden Lagerschalen 58 gesichert ist und die Stange 66 rechtwinklig zur Längsachse des Trägers 38 verläuft. Nach dem Einbauvorgang der Mitnehmer 60 können die entsprechenden Schraubenbolzen 64 durch die Bohrung 94 des Mitnehmeraufnahmeteils 88 und durch die Bohrung 72 des Lagerteils 68 eingeführt, und durch eine zugehörige Mutter 102 gesichert werden. Vor dem Aufsetzen der Mutter 102 ist allerdings noch der Halter 116 gemäß der Beschreibung weiter unten anzubringen. Nachdem der Schraubenbolzen 64 angezogen ist und auf diese Weise die Mitnehmereinheit 52 befestigt ist, kann es auf dem Träger 38 frei drehen, wobei es durch Anlage der Stange 66 an dem Führungselement 54 des Förderers 28 angetrieben bzw. in Drehrichtung versetzt wird.

Die Stange 66 und somit der Mitnehmer 60 untergliedern sich zudem in einen Innenteil 104 und einen Außenteil 106, wobei der Innenteil 104 der dem Träger 38 zugelegene und in den Lagerschalen 58 gehaltene Teil ist. An diesen Innenteil 104 schließt sich radial nach außen eine Sollbruchstelle 108 an, die eine Nut 110 und neben einem inneren Wulst 112 einen Anschlag 114 umschließt. Radial außerhalb folgt auf die Sollbruchstelle 108 der Außenteil 106, der über die Bewegung der Träger 36, 38 gegenüber dem Gehäuse 42 stets in radialer und tangentialer Richtung bewegt wird. Die Sollbruchstelle 108 ist so auf dem Mitnehmer 60 angeordnet, daß sie sich stets innerhalb des Gehäuses 42 befindet.

Jeder Halter 116 weist einen ersten und einen zweiten Schenkel 118, 120 auf, von denen sich der erste Schenkel 118 längs des Mitnehmers 60 - wenn auch mit einem geringen Abstand zu diesem - erstreckt und einenends eine nicht gezeigte Öffnung zur Aufnahme des Schraubenbolzens 64 enthält, über den er mit den Lagerschalen 58 und somit dem Träger 38 verbunden werden kann. Der zweite Schenkel 120 verläuft im rechten Winkel zu dem ersten Schenkel 118 und ist bedeutend kürzer, wobei seine Länge etwas größer ist als der Durchmesser der Stange 66. Der zweite Schenkel 120 wird von einer Aufnahmeöffnung 122 durchdrungen, deren Durchmesser um eine Spielpassung größer ist als der Außendurchmesser des Mitnehmers 60, so daß letzterer darin gleiten kann. Der Durchmesser der Aufnahmeöffnung 122 ist jedoch auch kleiner als der Außerdurchmesser des Anschlags 114, der an dem zweiten Schenkel 120 zur Anlage kommen kann. Der Halter 104 wird aus einem Flacheisen gestanzt und anschließend abgeköpft.

Zur Montage wird der Halter 116 mit seinem zweiten Schenkel 120 mittels seiner Aufnahmeöffnung 122 über den Außenteil des Mitnehmers 60 geführt, bevor dieser einenends durch das Führungselement 54 gesteckt und anderenends zwischen den Lagerschalen 58 festgelegt wird. Anschließend wird der Halter 116 zu dem Schraubenbolzen 64 bewegt, bis die Öffnung in dem ersten Schenkel 118 den Schraubenbolzen 64 übergreifen kann, wobei es belanglos ist, ob der Halter auf die Kopfseite oder die Mutterseite des Schraubenbolzens 64 aufgesetzt wird. Es ist jedoch zu beachten, daß der erste Schenkel 118 so angeordnet ist, daß er im Drehsinn des Förderers 28 dem Mitnehmer 60 nachfolgt, wie es in Figur 9 angegeben ist. Schließlich wird die gesamte Mitnehmereinheit 52 auf dem Träger 38 durch Anziehen der Mutter 102 axial und radial festgelegt. Die räumliche Anordnung des Halters 116 ist so getroffen, daß sich dessen zweiter Schenkel 120 zwischen dem Anschlag 114 und der Innenseite der Wandung des Gehäuses 42 erstreckt. Allerdings besteht in der ausgefahrenen Endstellung des Mitnehmers 60 zwischen der radial außen gelegenen Seite des zweiten Schenkels 120 und der Innenseite der Wandung des Gehäuses 42 ein sehr geringer Spalt, während in der eingezogenen Endstellung des Mitnehmers 60 dieser Spalt relativ groß ist.

Während des üblichen Fördervorgangs des Förderers 28 arbeitet die Mitnehmereinheit 52 wie bisher bekannte Mitnehmereinheiten auch. In dem Fall jedoch, in dem im Bereich der Mitnehmereinheiten 52 ein Fremdkörper zwischen das außenliegende Ende des Außenteils 106 eines Mitnehmers 60 und den Boden 18 gerät, entfaltet diese Mitnehmereinheit 52 ihre erfindungsgemäße Wirkung. Beim Auftreffen auf den Fremdkörper wird beim Vorliegen geeigneter Kräfteverhältnisse der Außenteil 106 von dem Innenteil 104 im Bereich der Nut 110 abbrechen. Nachdem sich der Außenteil 106 gelöst hat, besteht dessen einzige Verbindung zu der Mitnehmereinheit 52 nur noch über den Halter 116. Aufgrund der zuvor beschriebenen Bewegungsabläufe des zu der Rotationsachse des Förderers 28 exzentrisch angeordneten Trägers 38 gegenüber dem Gehäuse 42 wird sich im weiteren Verlauf die Mitnehmereinheit 52, also auch die Lagerschalen 58 und mit ihnen der Halter 116 von der Innenseite der Wandung des Gehäuses 42 wegbewegen. Gleichzeitig wird der zuvor noch mehr oder weniger L-förmige Halter 114 gemäß Figur 9 aufgrund der Anlage des Außenteils an dem Fremdkörper aufgebogen, so daß die beiden Schenkel 118, 120 im wesentlichen in eine Ebene zu liegen kommen. Dabei wird der Außenteil 106 nach innen gezogen und kann nicht nach außen auf den Boden 18 bzw. die darüber gleitende Erntegutmatte fallen. Aufgrund der Relativbewegung zwischen dem exzentrisch gelagerten Träger 38 gegenüber dem sich drehenden Gehäuse 42 wird der Außenteil 106 von dem nunmehr verbogenen Halter 116 bis hinter die Innenseite der Wandung des Gehäuses 42 gezogen und tritt somit nach innen aus dem Führungselement 54 heraus. Im letztgenannten Stadium verläuft der Innenteil 104 zu dem Außenteil 106 im wesentlichen unter einem rechten Winkel. Die Spielpassung zwischen der Aufnahmeöffnung 122 und dem Außenteil 106 ermöglicht es schließlich, daß sich der Außenteil 106 von dem zweiten Schenkel 120 löst und in das Innere des Gehäuses 42 fällt, wo er verbleibt und zu einem späteren Zeitpunkt ersetzt werden kann.

## Patentansprüche

1. Mitnehmereinheit (52) eines umlaufenden Förderers (28), insbesondere Einzugsfingerzusammenbau eines Schneckenförderers einer Erntebergungsvorrichtung, mit einem Mitnehmer (60), der

a) über einen Träger (38) an dem Förderer (28) gehalten ist und

b) einen innerhalb eines Gehäuses (42) des Förderers (28) auf dem Träger (38) gehaltenen Innenteil (104) sowie einen zum Eingriff mit einem zu fördernden Gut aus dem Gehäuse (42) ragenden Außenteil (106) aufweist,

und mit einem Halter (116), der

c) eine Aufnahmeöffnung (122) aufweist, in der der Mitnehmer (60) aufgenommen ist,

d) den Mitnehmer (60) mit dem Träger (38) verbindet, und

e) plastisch deformierbar ist,

wobei der Außenteil (106)

f) in der Aufnahmeöffnung (122) aufgenommen ist und

g) einen Anschlag (114) aufweist, der auf der der Gehäuseaußenseite zugelegenen Seite des Halters (116) an diesem zur Anlage bringbar ist.

2. Mitnehmereinheit nach Anspruch 1, dadurch gekennzeichnet, daß zwischen dem Innen- und dem Außenteil (104, 106) eine Sollbruchstelle (108) vorgesehen ist.

3. Mitnehmereinheit nach Anspruch 1 oder 2, dadurch gekennzeichnet, daß der Mitnehmer (60) um den Träger (38) schwenkbar ist.

4. Mitnehmereinheit nach einem oder mehreren der vorherigen Ansprüche, dadurch gekennzeichnet, daß der Anschlag (114) unmittelbar seitlich der Sollbruchstelle (108) vorgesehen ist.

5. Mitnehmereinheit nach einem oder mehreren der vorherigen Ansprüche, dadurch gekennzeichnet, daß die Aufnahmeöffnung (122) den Mitnehmer (60) mit einer Spielpassung aufnimmt.

6. Mitnehmereinheit nach einem oder mehreren der vorherigen Ansprüche, dadurch gekennzeichnet, daß der Halter (116) einen ersten und einen zweiten Schenkel (118, 120) enthält, wobei der erste Schenkel (118) an dem Träger (38) befestigt ist und der zweite Schenkel (120) die Aufnahmeöffnung (122) enthält.

7. Mitnehmereinheit nach Anspruch 6, dadurch gekennzeichnet, daß sich der erste und der zweite Schenkel (118, 120) in einem Zustand normaler Förderung unter einem Winkel von ca. 90° zueinander erstrecken.


**Claims**

1. Pick-up unit (52) for a revolving conveyor (28), more particularly feed finger assembly of a revolving conveyor of a grain-stacking device, with a pick-up member (60), which
   a) is held by a carrier (38) on the conveyor (28), and
   b) has an inner portion (104) secured within a casing (42) of the conveyor (28) on the carrier (38), and an outer portion (106) projecting out of the casing (42) for engagement with a material to be conveyed, and with a retaining means (116), which
   c) has a receiving opening (122) in which the pick-up member (60) is housed,
   d) connects the pick-up member (60) with the carrier (38), and
   e) is plastically deformable,
      the outer portion (106)
   f) is housed in the receiving opening (122) and
   g) has a stop (114) which, on the side of the retaining means (116) facing away from the outer side of the casing (42), may be brought into contact therewith.

2. Pick-up unit according to Claim 1, characterised in that a break-off point (108) is provided between the inner and outer portions (104, 106).

3. Pick-up unit according to Claim 1 or 2, characterised in that the pick-up member (60) is pivotable about the carrier (38).

4. Pick-up unit according to one or more of the preceding Claims, characterised in that the stop (114) is provided directly laterally to the break-off point (108).

5. Pick-up unit according to one or more of the preceding Claims, characterised in that the receiving opening (122) houses the pick-up member (60) with a clearance fit.

6. Pick-up unit according to one or more of the preceding Claims, chatacterised in that the retaining means (116) comprise a first and a second arms (118, 120), the first arm (118) being attached to the carrier (38), and the second arm (120) containing the receiving opening (122).

7. Pick-up unit according to Claim 6, characterised in that the first and second arms (118, 120) in the condition relating to normal conveyance, extend at an angle of approximately 90° relative to one another.


**Revendications**

1. Unité entraîneuse (52) d'un convoyeur rotatif (28), notamment ensemble de doigt entraîneur d'un convoyeur à hélice d'un dispositif de récupération de produit récolté, avec un entraîneur ( 60 ), qui
   a) est maintenu sur le convoyeur (28) par l'intermédiaire d'une barre porteuse (38) et
   b) présente une partie intérieure (104) maintenue sur la barre porteuse (38) à l'intérieur d'un carter (42) du convoyeur (28), ainsi qu'une partie extérieure (106) faisant saillie hors du carter (42) pour s'engager avec le produit récolté à convoyer,
   et avec un support (116), qui
   c) présente une ouverture réceptrice (122), dans laquelle est reçu l'entraîneur (60),
   d) assemble l'entraîneur (60) à la barre porteuse (38),
   e) est plastiquement déformable, la partie extérieure (106)
   f) étant reçue dans l'ouverture réceptrice (122) et
   g) présentant une butée (114), qui peut être amenée en application contre le support (116) sur le côté de ce dernier éjoigné du côté extérieur du carter.

2. Unité entraîneuse selon la revendication 1, caractérisée en ce qu'un point de rupture privilégiée (108) est prévu entre la partie intérieure et la partie extérieure (104, 106).

3. Unité entraîneuse selon la revendication 1 ou 2, caractérisée en ce que l'entraîneur (60) est pivotant autour de la barre porteuse (38).

4. Unité entraîneuse selon l'une ou plusieurs des revendications précédentes, caractérisée en ce que la butée (114) est prévue directement à côté du point de rupture privilégiée (108).

5. Unité entraîneuse selon l'une ou plusieurs des revendications précédentes, caractérisée en ce que l'ouverture réceptrice (122) reçoit l'entraîneur (60) avec un jeu d'ajustement.

6. Unité entraîneuse selon l'une ou plusieurs des revendications précédentes, caractérisée en ce que le support (116) comprend une première et une seconde branches (118, 120), la première branche (118) étant fixée à la barre porteuse (38) et la seconde branche (120) contenant l'ouverture réceptrice (122).

7. Unité entraîneuse selon la revendication 6, caractérisée en ce que la première et la seconde branches (118, 120), dans un état de convoyage normal, s'étendent sous un angle d'environ 90° l'une par rapport à l'autre.

EP 0 371 372 B1

FIG. 1

FIG. 2

FIG. 3

FIG. 4

FIG. 5

FIG. 8

FIG. 9

FIG. 6

FIG. 7